# EUROPÄISCHE PATENTSCHRIFT

(11) **EP 2 544 854 B1**
(45) Veröffentlichungstag und Bekanntmachung des Hinweises auf die Patenterteilung: **24.02.2016**
(21) Anmeldenummer: 11707825.3
(22) Anmeldetag: 03.03.2011
(51) Int. Cl.: B23Q 11/12, B23Q 39/04, B23B 9/00, H02K 1/20

(54) **MEHRSPINDELDREHMASCHINE**
MULTI-SPINDLE LATHE
TOUR MULTIBROCHE

(30) Priorität: 12.03.2010 DE 102010002804
(43) Veröffentlichungstag der Anmeldung: 16.01.2013
(60) Teilanmeldung: 15193649.9
(73) Patentinhaber: Index-Werke GmbH & Co. KG Hahn & Tessky, 73730 Esslingen (DE)
(72) Erfinder: SCHUMACHER, Karl-Heinz, 72760 Reutlingen (DE)
(74) Vertreter: Hoeger, Stellrecht & Partner Patentanwälte mbB
(86) Internationale Anmeldenummer: PCT/EP2011/053223
(87) Internationale Veröffentlichungsnummer: WO 2011/110476

(56) Entgegenhaltungen:
- WO-A1-98/07227
- WO-A1-03/013781
- DE-A1- 10 022 138
- US-A- 5 620 646

## Beschreibung

Die Erfindung betrifft eine Mehrspindeldrehmaschine umfassend ein Maschinengestell, eine in dem Maschinengestell angeordnete und um eine Spindeltrommelachse drehbare Spindeltrommel, die zumindest teilweise aus in einer zur Spindeltrommelachse parallelen Stapelrichtung aus Flachmaterial ausgeschnitten und sich Stapelebenen quer zur Stapelrichtung erstreckenden Segmenten mit einander überlappenden Aufnahmeausschnitten und Kühlkanalausschnitten aufgebaut ist, so dass die Spindeltrommel Spindelmotoraufnahmen für Spindelmotoren und ein von dieser durch Wandstege getrenntes Kühlkanalsystem aufweist.

Eine derartige Mehrspindeldrehmaschine ist aus der WO 03/013781 A1 bekannt.

Bei der bekannten Mehrspindeldrehmaschine ist zwar prinzipiell eine Kühlung der Spindeltrommel möglich, es ist jedoch nicht möglich, die Spindeltrommel möglichst gleichmäßig zu kühlen, um möglichst weitgehend thermische Verlagerungen zu vermeiden und die von den Spindelmotoren erzeugte Wärme möglichst optimal abzuführen:

Diese Aufgabe wird bei einer Mehrspindeldrehmaschine der eingangs beschriebenen Art erfindungsgemäß durch die Merkmale des Anspruchs 1 gelöst.

Der Vorteil der erfindungsgemäßen Lösung ist darin zu sehen, dass einerseits durch das flüssige Kühlmedium eine effiziente Kühlung der Spindeltrommel über das Kühlkanalsystem erfolgt und andererseits die parallel gespeisten Teilkanalsysteme die Möglichkeit eröffnen, die Kühlleistung in verschiedenen Bereichen der Spindeltrommel, die einen verschieden starken Wärmeeintrag erfahren, anzupassen.

Dabei ist es besonders günstig, wenn die Teilkanalsysteme in Richtung der Spindeltrommelachse aufeinander folgende unterschiedliche Abschnitte der Spindelmotoraufnahme kühlen.

Durch die Zuordnung der Teilkanalsysteme zu einzelnen unterschiedlichen Abschnitten der jeweiligen Spindelmotoraufnahme besteht die Möglichkeit, gezielt die jeweils einen unterschiedlichen Wärmeeintrag aufweisenden Abschnitte zu kühlen.

Prinzipiell wäre es denkbar, die Teilkanalsysteme dennoch so anzuordnen, dass diese bereichsweise überlappen.

Aus Gründen eines möglichst einfachen und damit kostengünstigen Aufbaus hat es sich als zweckmäßig erwiesen, wenn die mehreren Teilkanalsysteme in Richtung der Spindelachse in aufeinander folgenden Bereichen der Spindeltrommel seitlich der Spindelmotoraufnahme angeordnet sind.

Dabei ist vorzugsweise jeweils in einem der Bereiche ein Teilkanalsystem vorgesehen, das diesen Bereich kühlt, während die anderen Teilkanalsysteme jeweils einem anderen Bereich der Spindeltrommel angeordnet sind und diesen kühlen.

Prinzipiell wäre es möglich, die Teilkanalsysteme so anzuordnen, dass diese jeweils die Spindelmotoraufnahme umschließen.

Aus Gründen einer möglichst kostengünstigen und gleichzeitig raumsparenden Konstruktion ist es jedoch von Vorteil, wenn die Teilkanalsysteme in Zwischenräumen zwischen in einer Umlaufrichtung um die Spindeltrommelachse aufeinander folgend angeordneten Spindelmotoraufnahmen angeordnet sind, so dass die radiale Ausdehnung der Spindeltrommel in Bezug auf ihre Spindeltrommelachse möglichst gering gehalten werden kann.

Vorzugsweise sind dabei in jedem Zwischenraum zwischen zwei Spindelaufnahmen in Richtung der Spindeltrommelachse mehrere Teilkanalsysteme aufeinander folgend angeordnet.

Hinsichtlich der Speisung der Teilkanalsysteme wurden im Zusammenhang mit der bisherigen Beschreibung der erfindungsgemäßen Lösung keine näheren Angaben gemacht.

So sieht die erfindungsgemäße Lösung vor, dass die Teilkanalsysteme durch einen gemeinsamen, die Spindeltrommel umschließenden Ringraum mit flüssigem Kühlmedium gespeist sind.

Ein derartiger, die Spindeltrommel umschließender Ringraum erlaubt es, in einfacher Weise trotz der Drehbarkeit der Spindeltrommel dieser in jeder Drehstellung das flüssige Kühlmedium zuzuführen, und zwar allen Teilkanalsystemen gleichzeitig.

Insbesondere ist dabei vorgesehen, dass eine stationäre Ringraumabdeckung den Ringraum übergreift und beiderseits desselben an diesen abdichtend anschließt.

Ferner ist vorzugsweise vorgesehen, dass die Teilkanalsysteme das flüssige Kühlmedium in einen die Spindeltrommel umschließenden Ringraum für abfließendes Kühlmedium abgeben.

Auch ein derartiger Ringraum hat den Vorteil, dass damit in einfacher Weise die Möglichkeit besteht, das in diesen Ringraum einströmende Kühlmedium abzuleiten und wieder aufzunehmen.

Prinzipiell könnte der Ringraum für das abfließende Kühlmedium in den die Teilkanalsysteme das Kühlmedium abgeben, auch gleichzeitig zum Auffangen des Kühlmediums dienen.

Besonders günstig ist es jedoch, wenn der Ringraum für das abfließende Kühlmedium in eine Sammelaufnahme übergeht, in welcher das in den Ringraum einströmende und dabei abfließende Kühlmedium gesammelt und wiederum zur Kühlung der Teilkanalsysteme verwendet wird.

Um die durch die einzelnen Teilkanalsysteme zur Verfügung gestellte Kühlleistung an den Wärmeeintrag anpassen zu können, ist vorzugsweise vorgesehen, dass der Durchfluss von Kühlmedium durch die unterschiedlichen Teilkanalsysteme durch Drosselelemente abstimmbar ist.

Besonders günstig ist es dabei, wenn die Drosselelemente Austrittsöffnungen der Teilkanalsysteme zugeordnet sind.

Beispielsweise können dabei die Drosselelemente einstellbare oder sogar durch eine Steuerung der Mehrspindeldrehmaschine steuerbare Drosselelemente sein, so dass eine Regelung der von den Teilkanalsystemen abgeführten Wärme möglich wäre.

Eine besonders einfache Lösung sieht jedoch vor, dass die Drosselelemente statisch einstellbare Drosselelemente sind.

Hinsichtlich der Ausbildung des Statorkörpers der Spindelmotoren wurden bislang keine näheren Angaben gemacht.

Beispielsweise könnte der Statorkörper, wie bei bisherigen Spindelmotoren üblich, noch mit einer Umhüllung versehen sein und mit dieser Umhüllung in der Spindelmotoraufnahme angeordnet sein.

Eine besonders günstige Lösung sieht vor, dass der Statorkörper als Statorblechpaket ausgebildet ist und dass das Statorblechpaket unmittelbar an einer Innenwand einer Statoraufnahme der Spindelmotoraufnahme anliegt, so dass ein optimaler Wärmeübergang von dem Statorkörper auf die Spindeltrommel und somit eine optimale Wärmeableitung gewährleistet ist.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: einen vertikalen Schnitt durch ein eine Spindeltrommel tragendes Maschinengestell einer Mehrspindeldrehmaschine;
- Fig. 2: eine perspektivische Ansicht der Spindeltrommel der erfindungsgemäßen Mehrspindeldrehmaschine;
- Fig. 3: einen Schnitt längs Linie 3-3 in Fig. 2;
- Fig. 4: einen Schnitt längs Linie 4-4 in Fig. 2;
- Fig. 5: eine Explosionsdarstellung aufeinanderfolgender Segmente mit entsprechenden Ausschnitten;
- Fig. 6: eine Darstellung der Segmente ähnlich Fig. 5 im Bereich von Einlassöffnungen eines ersten Teilkanalsystems;
- Fig. 7: einen Schnitt längs Linie 7-7 in Fig. 3 und

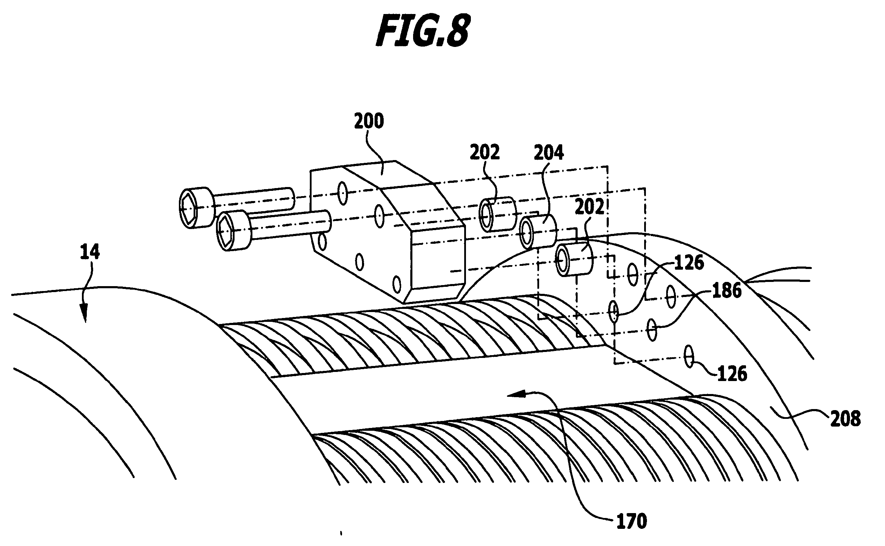

- Fig. 8: eine ausschnittsweise vergrößerte perspektivische Explosionsdarstellung von Drosselelementen im Bereich von Auslassöffnungen des ersten Teilkanalsystems und des dritten Teilkanalsystems.

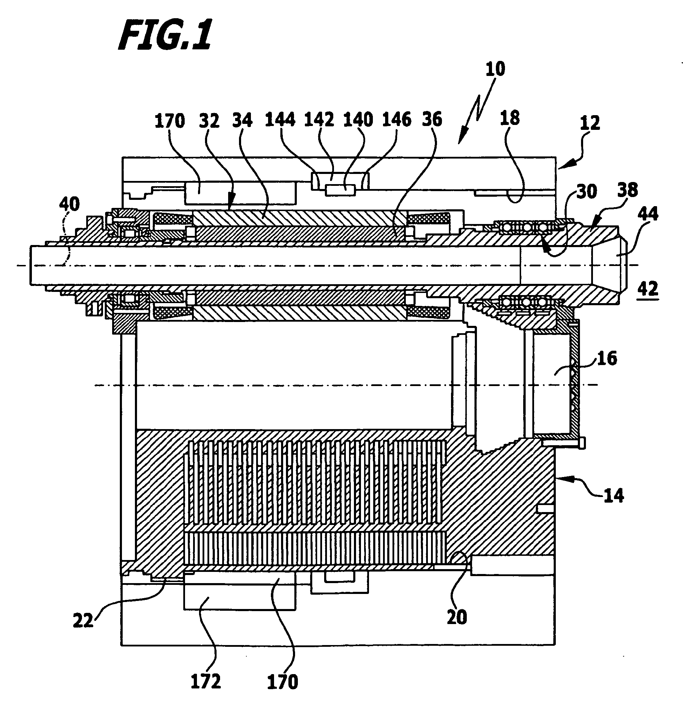

Eine in Fig. 1 in Teilen dargestellte Mehrspindeldrehmaschine 10 umfasst ein Maschinengestell 12, in welchem eine als Ganzes mit 14 bezeichnete Spindeltrommel um eine Spindeltrommelachse 16 drehbar gelagert ist, wobei die drehbare Lagerung der Spindeltrommel 14 in einer Spindeltrommelaufnahme 18 des Maschinengestells 12 mittels mantelseitig der Spindeltrommel 14 angeordneten Drehlagern 20 und 22 erfolgt.

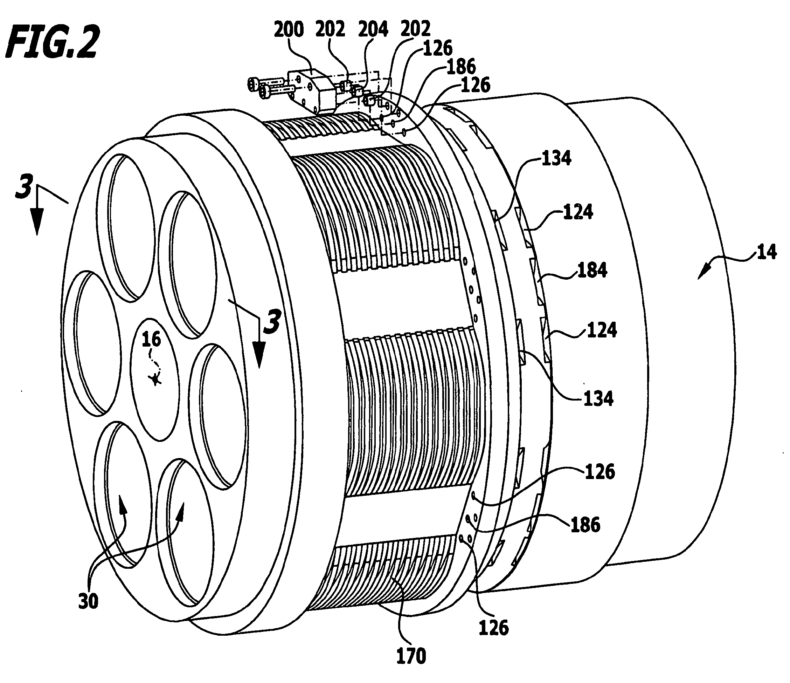

Die Spindeltrommel 14 umfasst, wie in Fig. 2 dargestellt, eine Vielzahl von Spindelmotoraufnahmen 30, die um die Spindeltrommelachse 16 herum in der Spindeltrommel 14 angeordnet sind und diese über ihre ganze Länge durchsetzen.

In jeder der Spindelmotoraufnahmen 30 sitzt ein als Ganzes mit 32 bezeichneter und als Hohlwellenmotor ausgebildeter Spindelmotor, welcher einen Stator 34 aufweist, der die Statorwicklungen aufnimmt sowie einen innerhalb des Stators 34 angeordneten Rotor 36, welcher unmittelbar auf einem Spindelrohr 38 sitzt und durch dieses Spindelrohr 38 um eine Spindelachse 40 relativ zum Stator 34 drehbar gelagert ist. Dabei trägt das Spindelrohr 38 beispielsweise auf einer einem Arbeitsraum 42 zugewandten Seite eine nicht dargestellte Werkstückspanneinrichtung zum Spannen eines in dem Spindelrohr 38 aufgenommenen Werkstücks in bekannter Weise.

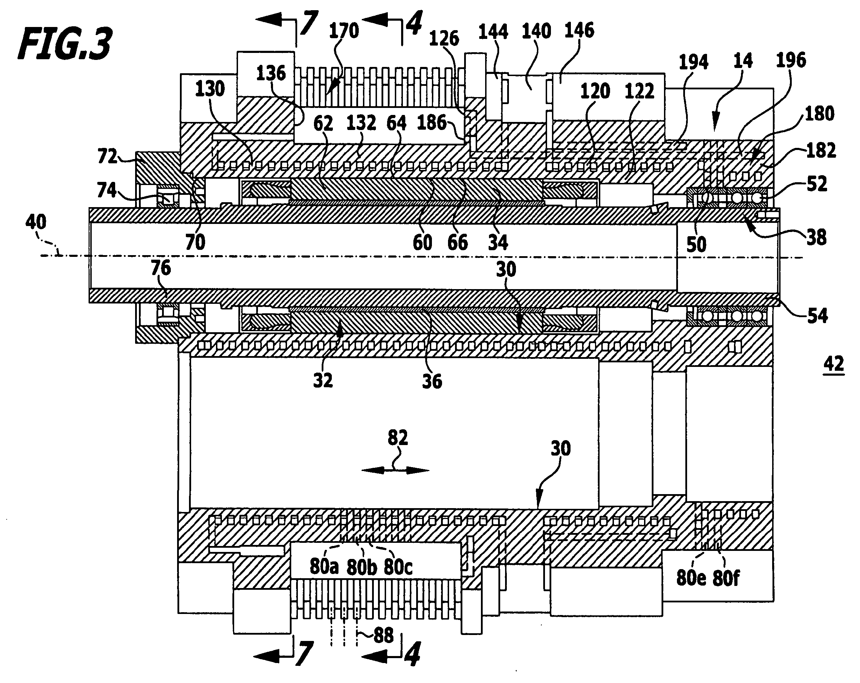

Wie insbesondere in Fig. 3 vergrößert dargestellt, umfasst die die Spindeltrommel 14 durchsetzende Spindelmotoraufnahme 30 einen vorderen eine Spindellageraufnahme 50 bildenden Abschnitt, in welchem ei vordere Spindellagerung 52 sitzt, welche das Spindelrohr 38 an einem vorderen, dem Arbeitsraum 42 zugewandten Endbereich 54 lagert.

Ferner umfasst die Spindelmotoraufnahme 30 einen eine Statoraufnahme 60 bildenden Abschnitt, in welchem der Stator 36 mit einem Statorwicklungen aufnehmenden und aus Statorblechen aufgebauten Statorkörper 62 sitzt, wobei eine Mantelfläche 64 des Statorkörpers 62 direkt, lediglich gegebenenfalls noch gekoppelt mit einer Wärmeleitmasse, an einer Innenwand 66 der Statoraufnahme 60 der Spindeltrommel 14 anliegt, um einen guten Wärmeübergang zwischen dem Statorkörper 62, welcher die Statorwicklungen des Stators 36 aufnimmt, und der Spindeltrommel 14 im Bereich der Statoraufnahme 60 zu gewährleisten.

Das Spindelrohr 38 ist ferner über eine hintere Lageraufnahme 70 an der Spindeltrommel 14 abgestützt, wobei beispielsweise in die hintere Lageraufnahme 70 ein Lagerring 72 eingreift, welcher eine hintere Spindellagerung 74 aufnimmt, welche das Spindelrohr 38 an einem hinteren Endbereich 76 drehbar lagert.

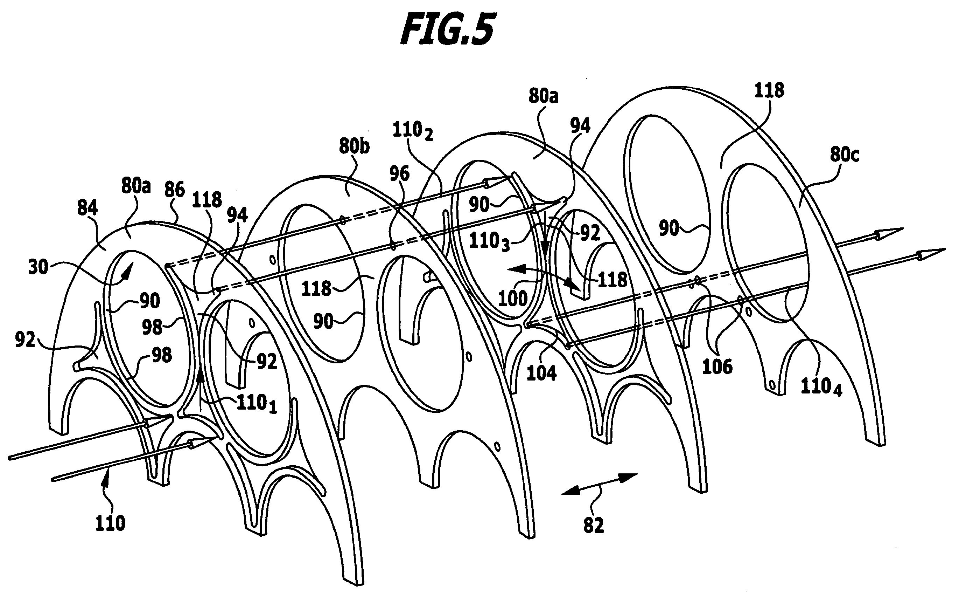

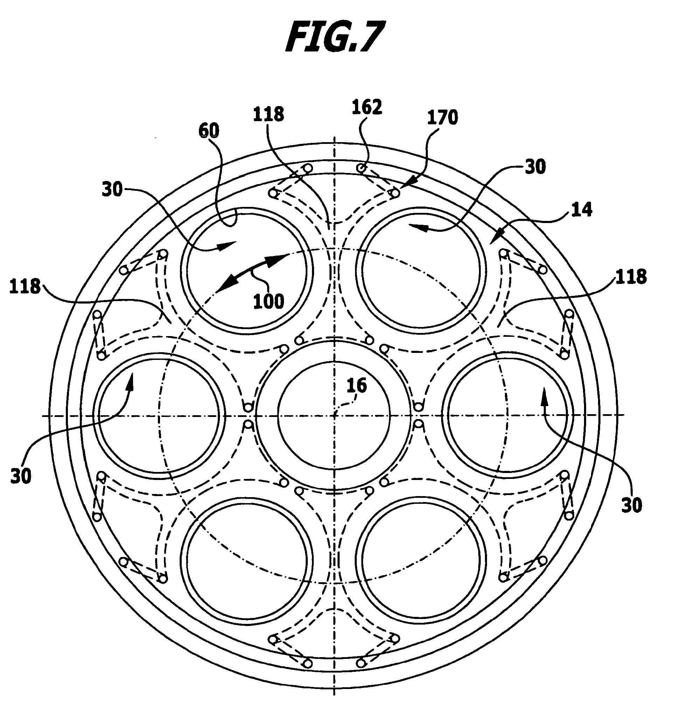

Wie in Fig. 3 bis 7 dargestellt, ist die Spindeltrommel 14 zumindest im Bereich der Statoraufnahme 60 aus einer Vielzahl von Segmenten 80a, 80b und 80c aufgebaut, die aus Flachmaterial, beispielsweise aus Stahlplatten, ausgeschnitten sind und in einer zur Spindeltrommelachse 16 parallelen Stapelrichtung 82 gestapelt und miteinander stoffschlüssig, beispielsweise durch Löten, insbesondere Hartlöten, zu einem zusammenhängenden Körper verbunden sind. Die einzelnen Segmente 80 weisen dabei vorzugsweise planparallele Oberflächen 84 und 86 auf und erstrecken sich in senkrecht zur Stapelrichtung 82 verlaufenden Stapelebenen 88, wie beispielsweise auch in der europäischen Patentanmeldung EP 1 414 615 beschrieben.

Zur Bildung der Spindelmotoraufnahme 30 sind die Segmente 80 mit Aufnahmeausschnitten 90 versehen, die zusammen in Richtung der Stapelrichtung 82 die Spindelmotoraufnahme 30 bilden.

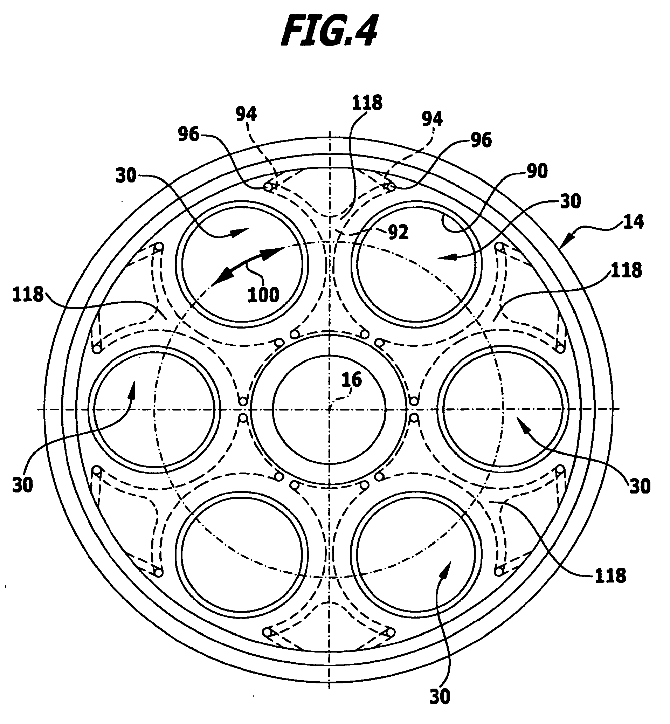

Ferner sind zur Kühlung der Spindelmotoraufnahme 30, insbesondere im Bereich der Statoraufnahme 60, in Segmenten 80a jeweils zwischen in einer Umlaufrichtung 100 aufeinanderfolgenden Aufnahmeausschnitten 90 Kühlausschnitte 92 vorgesehen (Fig. 4 bis 7), während in den Segmenten 80b mit in bezüglich der Spindeltrommelachse 60 radial außenliegenden Bereichen 94 der Kühlausschnitte 92 überlappende Kühlausschnitte 96 vorgesehen sind, die im nächstfolgenden Segment 80a wiederum mit den radial außenliegenden Bereichen 94 der Kühlausschnitte 92 überlappen.

Ferner sind in den Segmenten 80c mit bezüglich der Spindeltrommel 16 radial innenliegenden Bereichen 104 überlappende Kühlausschnitte 106 vorgesehen, so dass bei einer Stapelfolge eines Segments 80a, eines Segments 80b, eines Segments 80a und eines Segments 80c sowie eines wiederum folgenden Segments 80a einer nächsten Stapelfolge ein Strömungspfad 110 für ein Kühlmedium entsteht, welcher in den Segmenten 80a in Richtung ungefähr radial zur Spindeltrommelachse 16 entweder mit einem Strömungspfadabschnitt 110₁ von innen nach außen oder mit einem Strömungspfadabschnitt 110₃ von außen nach innen verläuft, und in dem Segment 80b mit einem Strömungspfadabschnitt 110₂ und in dem Segment 80c mit einem Strömungspfadabschnitt 110₄ jeweils ungefähr parallel zur Spindeltrommelachse 16 verläuft, so dass der Strömungspfad 110 bei seinem Gesamtverlauf in Richtung der Spindeltrommelachse 16 jeweils abwechselnd in axialer 110₂ und 110₄ und in radialer 110₁ und 110₃ Richtung zur Spindeltrommelachse 16 verlaufende Abschnitte aufweist, welche letztere die angrenzenden Segmente 80b und 80c und die in den Segmenten 80a zwischen den Ausschnitten 90 und den Kühlausschnitten 92 liegende Wandabschnitte 98 effizient kühlen.

Durch einen derartigen Aufbau der Statoraufnahme 60 aus den beschriebenen in der Stapelrichtung 82 aufeinanderliegenden Segmenten 80a, 80b und 80c besteht die Möglichkeit, die Spindeltrommel 14 in ihrem an die Statoraufnahme 60 anschließenden Wandbereich effizient zu kühlen und somit die vom Stator 34 an die Spindeltrommel 14 im Bereich der Statoraufnahme 60 abgegebene Wärme effizient abzuführen.

Vorzugsweise sind zur Kühlung der Statoraufnahme 60, wie in Fig. 3 dargestellt, ein erstes Teilkanalsystem 120 und ein zweites Teilkanalsystem 130 vorgesehen, die in in Umlaufrichtung 100 zwischen den Spindelmotoraufnahmen 30 liegenden Zwischenräumen 118 und in in Richtung der Spindeltrommelachse 16 aufeinanderfolgenden Bereichen 122 und 132 der Zwischenräume 118 angeordnet sind, wobei das erste Teilkanalsystem 120 in einem der vorderen Spindellageraufnahme 50 zugewandten, an die Statoraufnahme 60 angrenzenden Bereich 122 angeordnet ist, während das zweite Teilkanalsystem 130 in einem der Spindellageraufnahme 50 abgewandten, an die Statoraufnahme 60 angrenzenden Bereich 132 vorgesehen ist.

Beide Teilkanalsysteme 120 und 130 werden parallel mit Kühlmedium, insbesondere mit flüssigem Kühlmedium betrieben.

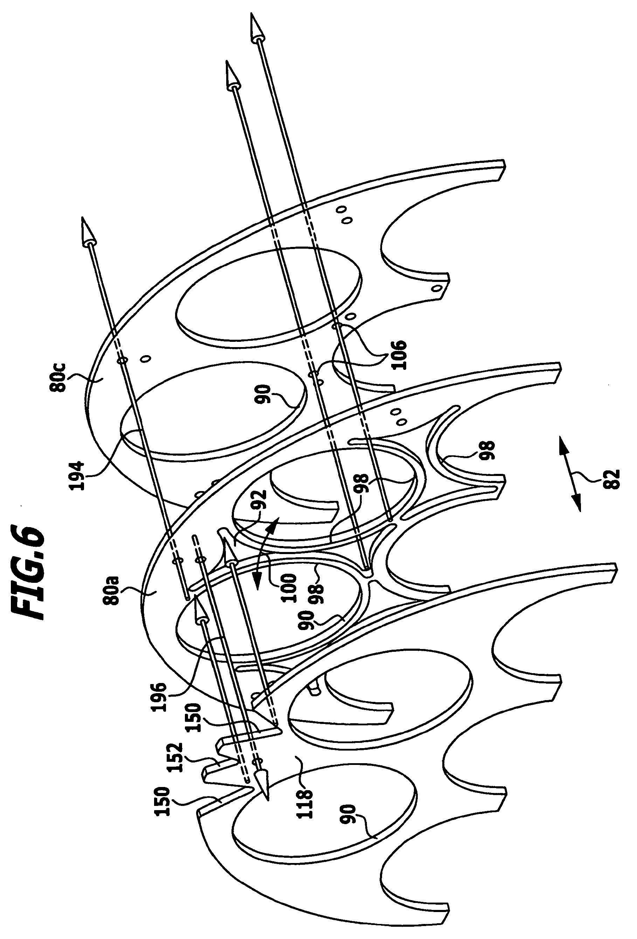

Hierzu ist, wie in Fig. 1 bis 3 dargestellt, ein die Spindeltrommel 14 an ihrer Außenseite umgebender Ringraum 140 vorgesehen, welcher von einer Ringraumabdeckung 142 übergriffen ist, die stationär in dem Maschinengestell 12 angeordnet ist und beiderseits der Ringraums 140 dichtend an Zylinderflächen 144 und 146 der Spindeltrommel 14 anschließt, so dass dem Ringraum 140 zugeführtes flüssiges Kühlmedium in dem Ringraum 140 verbleibt und aus diesem Ringraum über Eintrittsöffnungen 124 und 134 (Fig. 3), gebildet durch in speziellen Segmenten 80d vorgesehenen Eintrittsausschnitte 150 in das erste Teilkanalsystem 120 bzw. das zweite Teilkanalsystem 130 eintreten kann (Fig. 6).

Ausgehend von den Eintrittsausschnitten 150 in den Segmenten 80d hat dann das flüssige Kühlmedium die Möglichkeit, in die radial außenliegenden Bereiche 94 der Kühlausschnitte 92 in den nächstfolgenden Segmenten 80a einzutreten.

Ferner sind die Teilkanalsysteme 120 und 130 noch endseitig mit Austrittsöffnungen 126 und 136 versehen, welche ebenfalls in einen Ringraum 170 münden, der die Spindeltrommel 14 mantelseitig umschließt und über welchen das in diesen Ringraum 170 eintretende flüssige Kühlmedium der Schwerkraft folgend mantelseitig der Spindeltrommel 14 ablaufen kann und zwar bis zu einer Sammelaufnahme 172, aus welcher das Kühlmedium von einer Kühlmediumpumpe aufgenommen wird.

Wie in Fig. 3 dargestellt, ist zusätzlich für die Spindellageraufnahme 50 ein drittes Teilkanalsystem 180 vorgesehen, welches zur separaten Kühlung der Spindeltrommel 14 in einem Bereich 182 der in dem Zwischenraum 118 zwischen den Lageraufnahmen 50 liegt und eine zwischen den Eintrittsöffnungen 124 liegende Eintrittsöffnung 184 für dem Ringraum 140 zugeführtes Kühlmedium aufweist, die ebenfalls durch einen Einrtittsausschnitt 152 in dem Segment 80d gebildet ist, sowie einen dem Ringraum 170 zugewandten Auslass 186 zum Abführen des Kühlmediums in den Ringraum 170 aufweist.

Das dritte Teilkanalsystem 180 ist ebenfalls durch Kühlausschnitte 192 und 194 in Segmenten 80e und 80f gebildet, die in dem Bereich 182 des Zwischenraums 118 angeordnet sind und umfasst auch noch von den Eintrittsöffnungen 184 zu dem Bereich 182 führende Eintrittskanäle 194 sowie von dem Bereich 182 zu den Austrittsöffnungen 186 führende Austrittskanäle 196.

Um die Kühlung der Spindeltrommel 14 durch die Teilkanalsysteme 120, 130 und 180 so abzustimmen, dass die Spindeltrommel 14 in allen durch die Teilkanalsysteme 120, 130 und 180 gekühlten Bereichen 122, 132, 182 ein im Wesentlichen konstante Temperatur aufweist, die auch in allen von den Teilkanalsystemen 120, 130 und 180 durchsetzten Bereichen 122, 132, 182 im Wesentlichen identisch ist, sind die Austrittsöffnungen 126 des Teilkanalsystems 120 und die Austrittsöffnungen 186 des Teilkanalsystems 180 mit Drosselelementen 202 bzw. 204 versehen, die eine Einstellung des aus dem jeweiligen Teilkanalsystem 120 bzw. 180 in den Ringraum 170 abfließenden flüssigen Kühlmediums zur Einstellung der jeweiligen Temperatur erlauben. Vorzugsweise sind die Drosselelemente 202 und 204 in einem Aufnahmeblock 200 angeordnet, der einen die Öffnungen 126 und 186 tragenden Flansch 208 der Spindeltrommel 14 anschraubbar ist, und zwar so, dass die Drosselelemente 202 bzw. 204 unmittelbar vor den Öffnungen 126 bzw. 186 sitzen und den Durchfluss des austretenden Kühlmediums drosseln.

## Patentansprüche

1. Mehrspindeldrehmaschine umfassend
ein Maschinengestell (12),
eine in dem Maschinengestell (12) angeordnete und um eine Spindeltrommelachse (16) drehbare Spindeltrommel (14), die zumindest teilweise aus in einer zur Spindeltrommelachse (16) parallelen Stapelrichtung (82) aus Flachmaterial ausgeschnittenen und sich in Stapelebenen (88) quer zur Stapelrichtung (82) erstreckenden Segmenten (80) mit einander überlappenden Aufnahmeausschnitten (90) und Kühlkanalausschnitten (92, 96, 106) aufgebaut ist, so dass die Spindeltrommel (14) Spindelmotoraufnahmen (30) für Spindelmotoren (32) und ein von diesen durch Wandstege (98) getrenntes Kühlkanalsystem (120, 130, 180) aufweist,
**dadurch gekennzeichnet, dass** das Kühlkanalsystem mehrere parallel gespeiste Teilkanalsysteme (120, 130, 180) für ein flüssiges Kühlmedium aufweist und dass die Teilkanalsysteme (120, 130, 180) durch einen gemeinsamen, die Spindeltrommel (14) umschließenden Ringraum (140) mit flüssigem Kühlmedium gespeist sind.

2. Mehrspindeldrehmaschine nach Anspruch 1, **dadurch gekennzeichnet, dass** die Teilkanalsysteme (120, 130, 180) in Richtung der Spindeltrommelachse (16) aufeinander folgende unterschiedliche Abschnitte (50, 60) der Spindelmotoraufnahme (30) kühlen.

3. Mehrspindeldrehmaschine nach Anspruch 2, **dadurch gekennzeichnet, dass** die mehreren Teilkanalsysteme (120, 130, 180) in Richtung der Spindeltrommelachse (10) in aufeinander folgenden Bereichen der Spindeltrommel (14) seitlich der Spindelmotoraufnahmen (30) angeordnet sind.

4. Mehrspindeldrehmaschine nach Anspruch 3, **dadurch gekennzeichnet, dass** in jedem der Bereiche jeweils ein Teilkanalsystem (120, 130, 180) angeordnet ist.

5. Mehrspindeldrehmaschine nach einem der voranstehenden Ansprüche, **dadurch gekennzeichnet, dass** die Teilkanalsysteme (120, 130, 180) in Zwischenräumen zwischen in einer Umlaufrichtung (100) um die Spindeltrommelachse (16) aufeinanderfolgend angeordneten Spindelmotoraufnahmen (30) angeordnet sind.

6. Mehrspindeldrehmaschine nach Anspruch 5, **dadurch gekennzeichnet, dass** in jedem Zwischenraum zwischen zwei Spindelmotoraufnahmen (30) in Richtung der Spindeltrommelachse (16) mehrere Teilkanalsysteme (120, 130, 180) aufeinander folgend angeordnet sind.

7. Mehrspindeldrehmaschine nach einem der voranstehenden Ansprüche, **dadurch gekennzeichnet, dass** eine stationäre Ringraumabdeckung (142) den Ringraum (140) übergreift und beiderseits desselben an der Spindeltrommel (14) abdichtend abschließt.

8. Mehrspindeldrehmaschine nach einem der voranstehenden Ansprüche, **dadurch gekennzeichnet, dass** die Teilkanalsysteme (120, 130, 180) das flüssige Kühlmedium in einen die Spindeltrommel (14) umschließenden Ringraum (140) abgeben.

9. Mehrspindeldrehmaschine nach Anspruch 8, **dadurch gekennzeichnet, dass** der Ringraum (140) in eine Aufnahme für das Kühlmedium übergeht.

10. Mehrspindeldrehmaschine nach einem der voranstehenden Ansprüche, **dadurch gekennzeichnet, dass** ein Durchfluss von Kühlmedium durch unterschiedliche Teilkanalsysteme (120, 180) durch Drosselelemente (192, 194) abstimmbar ist.

11. Mehrspindeldrehmaschine nach Anspruch 10, **dadurch gekennzeichnet, dass** die Drosselelemente (192, 194) Austrittsöffnungen der Teilkanalsysteme (120, 180) zugeordnet sind.

12. Mehrspindeldrehmaschine nach einem der voranstehenden Ansprüche, **dadurch gekennzeichnet, dass** der Statorkörper (62) als Statorblechpaket ausgebildet ist und dass das Statorblechpaket unmittelbar an einer Innenwand der Statoraufnahme (60) der Spindelmotoraufnahme (30) anliegt.

## Claims

1. Multispindle lathe comprising
a machine frame (12),
a spindle drum (14) arranged in the machine frame (12) and rotatable about a spindle drum axis (16), said spindle drum being made up at least partially of segments (80) cut out from flat material in a stacking direction (82) parallel to the spindle drum axis (16) and extending in stacking planes (88) transverse to the stacking direction (82), said segments having receiving cutouts (90) and cooling channel cutouts (92, 96, 106) overlapping with one another such that the spindle drum (14) has spindle motor receptacles (30) for spindle motors (32) and a cooling channel system (120, 130, 180) separated therefrom by wall webs (98),
**characterized in that** the cooling channel system has several channel subsystems (120, 130, 180) for a liquid cooling medium, said channel subsystems being fed in parallel, and that the channel subsystems (120, 130, 180) are fed with liquid cooling medium through a common annular space (140) surrounding the spindle drum (14).

2. Multispindle lathe as defined in claim 1, **characterized in that** the channel subsystems (120, 130, 180) cool different sections (50, 60) of the spindle motor receptacle (30) following one another in the direction of the spindle drum axis (16).

3. Multispindle lathe as defined in claim 2, **characterized in that** the several channel subsystems (120, 130, 180) are arranged to the side of the spindle motor receptacles (30) in areas of the spindle drum (14) following one another in the direction of the spindle drum axis (10).

4. Multispindle lathe as defined in claim 3, **characterized in that** a channel subsystem (120, 130, 180) is arranged in each of the respective areas.

5. Multispindle lathe as defined in any one of the preceding claims, **characterized in that** the channel subsystems (120, 130, 180) are arranged in intermediate spaces between spindle motor receptacles (30) arranged so as to follow one another in a circumferential direction (100) around the spindle drum axis (16).

6. Multispindle lathe as defined in claim 5, **characterized in that** several channel subsystems (120, 130, 180) are arranged in each intermediate space between two spindle motor receptacles (30) so as to follow one another in the direction of the spindle drum axis (16).

7. Multispindle lathe as defined in any one of the preceding claims, **characterized in that** a stationary annular space cover (142) engages over the annular space (140) and sealingly adjoins the spindle drum (14) on both sides thereof.

8. Multispindle lathe as defined in any one of the preceding claims, **characterized in that** the channel subsystems (120, 130, 180) discharge the liquid cooling medium into an annular space (140) surrounding the spindle drum(14).

9. Multispindle lathe as defined in claim 8, **characterized in that** the annular space (140) merges into a receptacle for the cooling medium.

10. Multispindle lathe as defined in any one of the preceding claims, **characterized in that** a flow of cooling medium through different channel subsystems (120, 180) is adapted to be coordinated by throttle elements (192, 194).

11. Multispindle lathe as defined in claim 10, **characterized in that** the throttle elements (192, 194) are associated with exit openings of the channel subsystems (120, 180).

12. Multispindle lathe as defined in any one of the preceding claims, **characterized in that** the stator body (62) is designed as a stack of metal sheets and that the stack of metal sheets of the stator abuts directly on an inner wall of the stator receptacle (60) of the spindle motor receptacle (30).

## Revendications

1. Tour multibroche, comprenant :
un bâti de machine (12) ;
un tambour de broches (14) agencé dans le bâti de machine (12) et pouvant tourner autour d'un axe de tambour de broches (16), qui est construit au moins en partie à partir de segments (80) découpés dans un matériau plat dans une direction d'empilement (82) parallèle à l'axe de tambour de broches (16) et s'étendant dans des plans d'empilement (88) transversalement à la direction d'empilement (82), avec des découpes de réception (90) et des découpes de canaux de refroidissement (92, 96, 106) qui se recouvrent mutuellement, de telle manière que le tambour de broches (14) présente des logements de moteurs de broche (30) pour des moteurs de broche (32) et un système de canaux de refroidissement (120, 130, 180) séparé de ceux-ci par des nervures de paroi (98),
**caractérisé en ce que** le système de canaux de refroidissement présente plusieurs systèmes de canaux de refroidissement partiels alimentés en parallèle (120, 130, 180) pour un milieu de refroidissement liquide et **en ce que** les systèmes de canaux de refroidissement partiels (120, 130, 180) sont alimentés en milieu de refroidissement liquide par une chambre annulaire commune (140) entourant le tambour de broches (14).

2. Tour multibroche selon la revendication 1, **caractérisé en ce que** les systèmes de canaux partiels (120, 130, 180) refroidissent des sections différentes (50, 60) du logement de moteur de broche (30) qui se suivent dans la direction de l'axe de tambour de broches (16).

3. Tour multibroche selon la revendication 2, **caractérisé en ce que** les multiples systèmes de canaux partiels (120, 130, 180) sont disposés latéralement aux logements de moteurs de broche (30) dans des régions du tambour de broches (14) qui se suivent dans la direction de l'axe de tambour de broches (16).

4. Tour multibroche selon la revendication 3, **caractérisé en ce qu'**un système de canaux partiels (120, 130, 180) est respectivement disposé dans chacune des régions.

5. Tour multibroche selon l'une quelconque des revendications précédentes, **caractérisé en ce que** les systèmes de canaux partiels (120, 130, 180) sont disposés dans des espaces intermédiaires entre des logements de moteurs de broche (30) disposés à la suite l'un de l'autre dans la direction périphérique (100) autour de l'axe de tambour de broches (16).

6. Tour multibroche selon la revendication 5, **caractérisé en ce que** plusieurs systèmes de canaux partiels (120, 130, 180) sont disposés à la suite l'un de l'autre dans chaque espace intermédiaire entre deux logements de moteurs de broche (30) dans la direction de l'axe de tambour de broches (16).

7. Tour multibroche selon l'une quelconque des revendications précédentes, **caractérisé en ce qu'**un couvercle stationnaire (142) de la chambre annulaire recouvre la chambre annulaire (140) et se joint hermétiquement au tambour de broches (14) de part et d'autre de celle-ci.

8. Tour multibroche selon l'une quelconque des revendications précédentes, **caractérisé en ce que** les systèmes de canaux partiels (120, 130, 180) délivrent le milieu de refroidissement liquide dans une chambre annulaire (140) entourant le tambour de broches (14).

9. Tour multibroche selon la revendication 8, **caractérisé en ce que** la chambre annulaire (140) se prolonge en un logement pour le milieu de refroidissement.

10. Tour multibroche selon l'une quelconque des revendications précédentes, **caractérisé en ce qu'**un débit de milieu de refroidissement à travers des systèmes de canaux partiels différents (120, 180) peut être adapté au moyen d'éléments d'étranglement (192, 194).

11. Tour multibroche selon la revendication 10, **caractérisé en ce que** les éléments d'étranglement (192, 194) sont associés à des ouvertures de sortie des systèmes de canaux partiels (120, 180).

12. Tour multibroche selon l'une quelconque des revendications précédentes, **caractérisé en ce que** le corps de stator (62) est formé par un paquet de tôles de stator et **en ce que** le paquet de tôles de stator est appliqué directement sur une paroi intérieure du logement de stator (60) du logement de moteur de broche (30).
